# EUROPEAN PATENT APPLICATION

(11) **EP 2 312 437 A1**
(43) Date of publication of application: **20.04.2011**
(21) Application number: 09305916.0
(22) Date of filing: 30.09.2009
(51) Int. Cl.: G06F 9/445, G06F 9/44

(54) **Detecting client software versions**

(71) Applicant: Thomson Licensing, 92100 Boulogne-Billancourt (FR)
(72) Inventor: Heen, Olivier, 92648, Boulogne cedex (FR); Salmon-Legagneur, Charles, 92648, Boulogne Cedex (FR); Morvan, Michel, 92648, Boulogne Cedex (FR)
(74) Representative: Berthier, Karine

(57) **Abstract**

A method for detecting a version of a client software (210) in a network. A server (220) receives (201) a first request from the client software (210), sends (203) a first response comprising a first challenge to the client software (210), receives (205) a second request comprising an answer to the first challenge from the client software (210), and detects (207) the version of the client software (210) from at least the second request. The answer to the challenge is dependent on the version of the client software (210) and is expressed as a modification to a communication protocol used for the first and the second request. Also provided are a server (220), a client (210) and a computer program product (240).

## Description

### FIELD OF THE INVENTION

The present invention relates generally to software, and in particular to enabling update of software on a network-connected computer.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

There are many types of software systems in which a client resides on the computers of the users, while server-type software resides elsewhere in the network to which the computers are functionally connected. Such software includes network clients - e.g. FTP clients, Internet browsers, and on-line content viewers - and client-servers such as peer-to-peer (P2P) software that simultaneously execute the client and the server software, and upgradable embedded software in devices such as the Xbox game console or mobile devices.

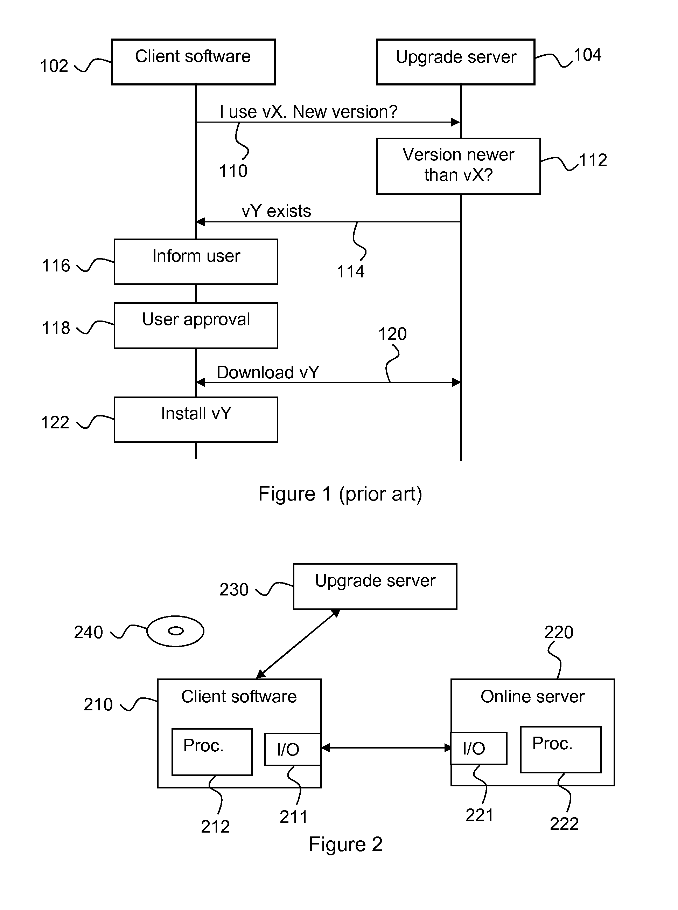

Figure 1 illustrates a typical software upgrade procedure in the prior art. When the client software 102 is started, it calls 110 a remote upgrade server 104 that verifies 112 if it stores an upgrade of the software by checking a version number indicator. If this is the case, then the upgrade server 104 returns 114 information that an upgrade is available in order to inform 116 the user. When the user approves 118 the download of the upgrade, it is downloaded 120, installed 122 and executed. After this, the software generally restarts, often by rebooting the computer.

However, the upgrade procedure may go wrong for a number of reasons. First, it is possible that the user does not want to bother with the download and therefore simply refuses the download. This may be because the user thinks that the upgrade will take too much time or that procedure is too complicated or intrusive, but the user may also be computer-wary and be afraid of downloading anything, etc. In this case, both the upgrade server and the software are aware that the upgrade was not performed and may suggest later updates to the user.

Second, if the user's is e.g. behind a company firewall, then any connections to the upgrade server may be blocked. In this case, however, neither the upgrade server nor the software is aware that the upgrade was not performed and may thus not notify the user.

A first prior art solution is the "update or die" policy, also called "mandatory updates". If the software is not able to contact the update server, then it stops. While this policy may be efficient, it is not always acceptable though, as users generally require service availability, especially in the field of audio/video content consumption. In addition, there may be perfectly good reasons why the software is unable to contact the upgrade server, such as if it is located behind a firewall that forbids this. In this case it is unfair to prevent the software from functioning, especially as software upgrades may be few and far between and that the software at least should work until a new version really is available. Finally, the whole system becomes relatively vulnerable, as the upgrade server becomes a single point of failure.

The skilled person will appreciate that the "update or die" policy is particularly unsuitable for P2P networks, as it tends to starve certain peers by separating traffic between updated version and deprecated versions, and as P2P software usually simultaneously function as client and server.

Further, some attackers may tamper with the code to change the behaviour of the upgrade client to fit their needs (e.g. by tampering with the current version number). A countermeasure is to use software protection to protect the upgrade function against tampering attacks. However, this kind of protection is not robust over time as it relies on the integrity of the software and even if the code is secure this solution does not solve the problem of how to handle users that do not wish to upgrade the software, as explained in the discussion of the first reason hereinbefore.

It will therefore be appreciated that there is a need for an upgrade solution that overcomes at least some of the drawbacks of the prior art. This invention provides such a solution.

### SUMMARY OF THE INVENTION

In a first aspect, the invention is directed to a method of detecting a version of a client software. A server receives a first request from the client software, sends a first response comprising a first challenge to the client software, receives a second request comprising an answer to the first challenge from the client software, and detects the version of the client software from at least the second request. The answer to the first challenge is dependent on the version of the client software and is expressed as a modification to a communication protocol used for the first and the second request.

In a first preferred embodiment, the communication protocol is HTML and the modification to the communication protocol is expressed as a request for a specific web page that depends on the first challenge.

In a second preferred embodiment, the modification to the communication protocol is expressed by sending a request to a specific port that depends on the first challenge.

In a third preferred embodiment, the server provides restricted access to information to the client software if the version of the client software does not meet a requirement for full access to information.

In a fourth preferred embodiment, the requirement for full access to information is that the version of the client software is the most recent version.

In a second aspect, the invention is directed to a server for detecting a version of a client software in a network. The server comprises a communication unit for receiving a first request from the client software, sending a first response comprising a first challenge to the client software, and receiving a second request comprising an answer to the first challenge from the client software. The server further comprises a processor for detecting the version of the client software from at least the second request. The answer to the first challenge is dependent on the version of the client software and is expressed as a modification to a communication protocol used for the first and the second request.

In a first preferred embodiment, the processor is further adapted to provide restricted access to information to the client software if the version of the client software does not meet a requirement for full access to information.

In a third aspect, the invention is directed to a client in a network that further comprises a server. The client comprises a processor executing a client software, and is adapted to receive a first challenge from the server, send a request comprising an answer to the first challenge to the server. The answer to the first challenge is dependent on the version of the client software and is expressed as a modification to a communication protocol used for the first and the second request.

In a first preferred embodiment, the communication protocol is HTML and the modification to the communication protocol is expressed as a request for a specific web page that depends on the first challenge.

In a second preferred embodiment, the modification to the communication protocol is expressed by sending a request to a specific port that depends on the first challenge.

In a fourth aspect, the invention is directed to a method of communicating with a server in a network. A client receives a first challenge from the server and sends a request comprising an answer to the first challenge to the server. The answer to the first challenge is dependent on the version of the client software and is expressed as a modification to a communication protocol used for the first and the second request.

In a fifth aspect, the invention is directed to a computer program product comprising software that, when executed in a processor performs the steps of method of the fourth aspect.

### BRIEF DESCRIPTION OF THE DRAWINGS

Preferred features of the present invention will now be described, by way of non-limiting example, with reference to the accompanying drawings, in which:
Figure 1 illustrates a typical prior art software upgrade procedure;
Figure 2 illustrates a network according to a preferred embodiment of the present invention; and
Figure 3 illustrates a signal flow diagram of a method according to a preferred embodiment of the present invention.

### PREFERRED EMBODIMENT OF THE INVENTION

Figure 2 illustrates a network according to a preferred embodiment of the present invention. The network comprises a client running a client software 210, an online server 220 and an upgrade server 230. The client software 210 is advantageously executed by a processor 212 connected to a memory (not shown) and a communication interface 211 for interaction with the online server 220. Likewise, the online server 220 comprises at least one processor 222 (hereinafter "processor") connected to a memory (not shown) and a communication interface 221. The processors 212, 222 of the client and the online server 220 are adapted to perform at least the actions of the main embodiment described hereinafter. A computer program product 240, such as a CD-ROM, stores the client software.

When the client software 210 contacts the online server 220, the online server requests a transform of the network traffic between the two devices. The transform is performed by the client software 210 and is dependent on the version of the client software and preferably also on a challenge sent to the client software 210.

The transform, which is preferably used continuously and not just during the establishment of the communication, may e.g. be a specific succession of changes of the port number or a specific ordering of required chunks of data in a P2P system.

The online server 220, which is aware of the transform, may then check that the transformed network traffic is as expected. If it is, then the online server 220 may assume that the version of the client software 210 is the expected one, but if it isn't, then the online server may react accordingly. It is preferred that the transform provides an indication of the version of the client software, so that this can be easily detected by the online software. This may for example be done by verifying the latest communication port used by the client software 210.

Once it has been detected that the client software 210 is of an older version than the latest version, the online server 220 may react appropriately, for example by sending an update message to the client software 210, but it is also possible to perform other actions such as restricting access by blocking traffic coming from a client software 210 of an older version, giving such client software lower priority than client software of newer versions, or reducing server functionalities for older client versions.

The transform is preferably based on protocol modification techniques, such as for example cryptographic port knocking and cryptographic web knocking, and/or protocol obfuscation techniques. The person skilled in the art will appreciate that it is advantageous to protect the software implementation of the transform method by one or more suitable prior art software protection techniques.

In a preferred embodiment, the traffic is transformed by cryptographic knocking preambles. These preambles are embedded within the natural network traffic. To counter reverse engineering, the function that computes the preambles in the software preferably uses anti-reverse engineering techniques. To avoid on-the-fly rewriting of network packets, the protocol is obfuscated.

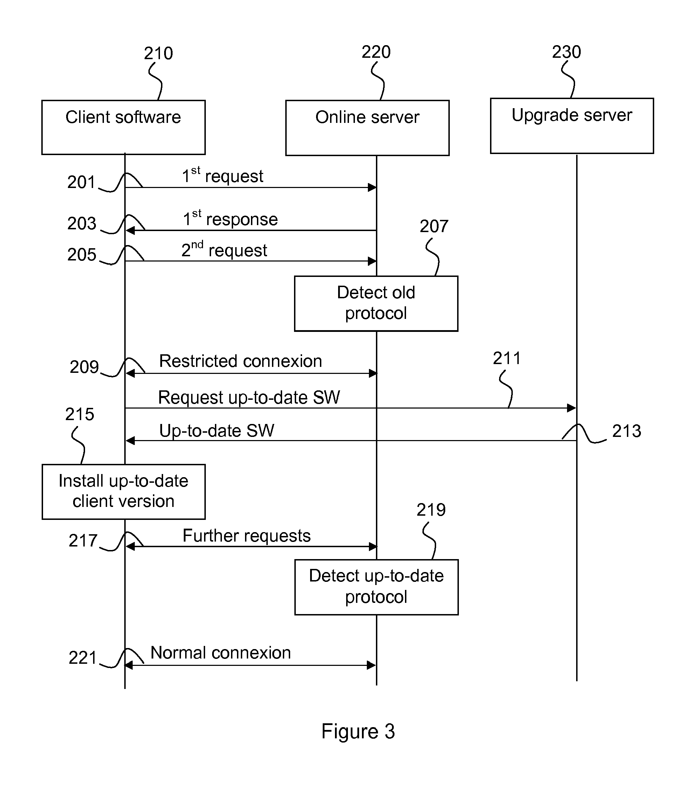

Figure 3 illustrates a signal flow diagram of a method according to a preferred embodiment of the present invention. As an illustrative example, the client 210 is a browser and the server 220 is an HTTP server. The client software comprises an embedded key Kₙ, where n corresponds to the software version. In the illustrative example, the client 210 does not have an up-to-date version of the client software.

In step 201, the client software 210 sends a first request to the online server 220. The request could for example be a generic request such as http:OnlineServerName/index.html. The online server 220 then returns 203 a first response that comprises the requested service (such as page index.html) and a first challenge c. The challenge is chosen by the online server 220 and is preferably independent of any information provided in the first request. The challenge is preferably changed from time to time, such as every day.

The client software 210 then uses a key Kᵢ of its software version i to encrypt the challenge c, giving {c}Kᵢ. The client includes the encrypted challenge in its next request 205 to the online server 220, e.g. http://Online ServerName/{c}Kᵢ.html.

The online server 220 preferably stores a number of prepared pages that correspond to {c}Kᵢ.html for at least some, preferably all, of the possible software version n. The online server 220 may thus use the request to detect 207 that the software version of the client software 210 is not up-to-date.

The online server 220 then allows reduced functionality or access to the client software 210 and preferably informs the client software 210 that its version is not up-to-date. It is also possible to allow full functionality or access to a number of different software versions, e.g. the three most recent versions, while disallowing it for others. The online server 220 may still send 209 the requested page to the client software 210, but it is advantageous to differentiate the information depending on the version of the client. For example, in an online news system, the invention can allow some clients to receive the most recent news, while there is a delay for other clients. Another example is in an online Video on Demand (VoD) system, where the online server may give very valuable content only to the software client with a version that, as far as the online server is aware, has not been hacked, while software clients with other versions only get less valuable content. A third example is a patch server that automatically provides the appropriate patches for a client depending on the version of its software. The skilled person will appreciate that an advantage is that the user does not need to choose correct patch.

The client server 210 then requests 211 up-to-date software from the upgrade server 230 that sends 213 a patch or complete version to the client, which then installs this to obtain an up-to-date version of the client software.

The up-to-date client software then sends 217 further requests to the online server 220, as it did in the beginning of the example. As these requests are generated by the up-to-date version, the online server 220 detects 219 that the client software is up-to-date and offers 221 normal functionality or access to the client software, which for example may comprise delivery of a requested web page that was refused to the older version of the client software.

In an advantageous variant, the online server 220 embeds further challenges c1, c2, ... in further pages, and the client software 210 calculates the proper responses and returns them to the online server 220. In this variant, the online server 220 can control specific sessions according to the version number of the client.

As already mentioned, the prior art update-or-die policy is unsuitable for P2P networks. The present invention, however, can provide means to starve deprecated P2P software versions (such as for example those that have been hacked), while still feeding upgraded P2P software clients.

This is possible as because P2P software comprises both a client part and a part that acts as a server for the other P2P clients. By using the invention in the server part of the P2P software, it is possible for the P2P software to detect the version of a client software and to decide, according to its version, whether or not this client should be served.

A result of this is that upgraded software can access content from both upgraded software and deprecated software, while deprecated software only can access content from deprecated software, but not from upgraded software. This can remain true even if the deprecated software has been broken, because it is difficult, if at all possible, to mimic the behaviour of upgraded software

An effect is that this can guarantee that upgraded software ends up working better than deprecated software, as the former can access content from a broader community. Moreover content distributors can choose to seed (i.e. start spreading) high value content in an upgraded version rather than in a deprecated version. Doing so, the distributors are sure that the content only spread through upgraded versions, until the upgraded version is broken.

The invention can provide a number of advantages, for example:
- Detection that is easy and unambiguous, avoids false positives, and is easily implemented without imposing additional traffic encryption.
- Detection traffic that is hard to block and hard to imitate or to replay.
- The possibility to carry out corrective actions, as previously described.
- The natural traffic between the client software and the online server is not overload; very little extra data - the challenge and the responses - are exchanged in addition to 'normal' traffic.
- Little cryptographic computing on the online server side, as the client has to perform a cryptographic computation first. This advantage provides some defence against denial of service attacks.
- The security of the invention does not rely on the integrity or software protection of the upgrade function in the deprecated version.
- Particular suitability for P2P software. For example, an intermediate server could separate the network traffic according to the software version to redirect traffic from up-to-date software clients to a highly available online server (and/or one with more content, more functionality...), and redirect traffic from other versions to a less available online server (and/or one with less content, less functionalities...).
- The invention encourages a better homogeneity of all deployed versions, as upgrades, at least to a certain extent, can be controlled.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference numerals appearing in the claims are by way of illustration only and shall have no limiting effect on the scope of the claims.

## Claims

1. A method of detecting a version of a client software (210) in a network, the method comprising the steps, at a server (220), of:
- receiving (201) a first request from the client software (210);
- sending (203) a first response to the client software (210), the first response comprising a first challenge;
- receiving (205) a second request from the client software (210), the second request comprising an answer to the first challenge;
- detecting (207) the version of the client software (210) from at least the second request;
**characterised in that** the answer to the first challenge is dependent on the version of the client software (210) and is expressed as a modification to a communication protocol used for the first and the second request.

2. The method of claim 1, wherein the communication protocol is HTML and the modification to the communication protocol is expressed as a request for a specific web page that depends on the first challenge.

3. The method of claim 1, wherein the modification to the communication protocol is expressed by sending a request to a specific port that depends on the first challenge.

4. The method of claim 1, further comprising the step of providing restricted access to information to the client software (210) if the version of the client software does not meet a requirement for full access to information.

5. The method of claim 4, wherein the requirement for full access to information is that the version of the client software (210) is the most recent version.

6. A server (220) for detecting a version of a client software (210) in a network, the server (220) comprising:
- a communication unit (221) for:
receiving a first request from the client software (210);
sending a first response to the client software (210), the first response comprising a first challenge; and
receiving a second request from the client software (210), the second request comprising an answer to the first challenge;
- a processor (222) for detecting the version of the client software (210) from at least the second request;
**characterised in that** the answer to the first challenge is dependent on the version of the client software (210) and is expressed as a modification to a communication protocol used for the first and the second request.

7. The server of claim 6, wherein the processor is further adapted to provide restricted access to information to the client software (210) if the version of the client software does not meet a requirement for full access to information.

8. A client in a network that further comprises a server (220), the client comprising a processor (212) executing a client software, the processor (212) being adapted to:
- receive a first challenge from the server (220);
- send a request to the server (220), the request comprising an answer to the first challenge;
**characterised in that** the answer to the first challenge is dependent on the version of the client software (210) and is expressed as a modification to a communication protocol used for the first and the second request.

9. The client of claim 8, wherein the communication protocol is HTML and the modification to the communication protocol is expressed as a request for a specific web page that depends on the first challenge.

10. The client of claim 8, wherein the modification to the communication protocol is expressed by sending a request to a specific port that depends on the first challenge.

11. A method of communicating with a server (220) in a network, the method comprising, at a client, the steps of:
- receiving (203) a first challenge from the server (220);
- sending (205) a request to the server (220), the request comprising an answer to the first challenge;
**characterised in that** the answer to the first challenge is dependent on the version of the client software (210) and is expressed as a modification to a communication protocol used for the first and the second request.

12. A computer program product (240) comprising software that, when executed in a processor (211) performs the steps of claim 11.
